# EUROPÄISCHE PATENTANMELDUNG

(11) **EP 3 961 517 A1**
(43) Veröffentlichungstag der Anmeldung: **02.03.2022**
(21) Anmeldenummer: 20193377.7
(22) Anmeldetag: 28.08.2020
(51) Int. Cl.: G06N 5/02, G06N 20/00

(54) **VERFAHREN UND EIN SYSTEM ZUM ERSTELLEN EINER INDUSTRIELLEN LÖSUNG MIT EINER KÜNSTLICHEN INTELLIGENZ**

(71) Anmelder: Siemens Aktiengesellschaft, 80333 München (DE)
(72) Erfinder: Bär, Schirin, 90461 Nürnberg (DE); Bär, Felix, 90461 Nürnberg (DE)

(57) **Zusammenfassung**

Die Erfindung betrifft ein Verfahren und ein System zum Erstellen einer industriellen Lösung KIS mit einer künstlichen Intelligenz, wobei durch einen Computer nach der Eingabe einer Problemstellung A-B zumindest ein Vorschlag für eine Architektur der Lösung mit einer künstlichen Intelligenz erstellt wird. Dabei sind in Tupeln eines Knowledge-Graph KG erste Informationen über Daten D, zweite Informationen über Anwendungen A und dritte Informationen über Modelle AI-M für künstliche Intelligenz gespeichert, wobei die Tupel mit den ersten und den zweiten Informationen mit den Tupeln der dritten Informationen zumindest teilweise mittels gewichteter Referenzen verknüpft sind. In einem ersten Schritt werden aus den Informationen der eingegebenen Problemstellung A-B neue Tupel EI1 extrahiert, in einem zweiten Schritt werden zu den neuen Tupeln EI1 identische oder zumindest ähnliche Tupel im Knowledge-Graph KG gefunden, in einem dritten Schritt wird anhand der gewichteten Referenzen der gefundenen Tupel zu den Tupeln mit den dritten Informationen zumindest eines der Modelle AI-M für künstliche Intelligenz gefunden, und in einem vierten Schritt wird das zumindest eine gefundene Modell AI-M für die Architektur der Lösung KIS vorgeschlagen und verwendet. Durch dieses Verfahren können auch wenig spezialisierte Benutzer durch eine einfache Eingabe von Basisinformationen eine geeignete KI-Lösung bzw. -Architektur identifizieren bzw. vorschlagen lassen und ggf. automatisiert implementieren und parametrisieren lassen.

## Beschreibung

Die Erfindung betrifft ein Verfahren zum Erstellen einer industriellen Lösung mit einer künstlichen Intelligenz gemäß dem Oberbegriff des Patentanspruchs 1, und ein System zum Erstellen einer industriellen Lösung mit einer künstlichen Intelligenz gemäß dem Oberbegriff des Patentanspruchs 10.

Viele industrielle Lösungen können vom Einsatz künstlicher Intelligenz profitieren. Die Hemmschwelle für die Industrie, KI (KI - Künstliche Intelligenz, auch "AI" - Artificial Intelligence genannt) in eine laufende Produktion zu integrieren und auf Hardware in der Anlage zu implementieren, ist heutzutage jedoch noch sehr groß. Fehlende KI-Expertise, fehlendes Vertrauen dem KI-System gegenüber und hoher Engineering- und Deployment-Aufwand (Installation und Inbetriebnahme) tragen dazu bei. Ein Unterstützsystem, das einen technisch ausgebildeten aber KI-unerfahrenen Mitarbeiter anleitet ein KI-basiertes Modell zu bauen, würde diese Hemmschwelle verringern und helfen, KI-betreffende Produkte (Neuronale Prozessoren, Edge-Computing, Cloud-Computing-Produkte) in der Industrie verstärkt einzusetzen.

Expertenwissen, welches einen im Bereich der Anwendung künstlicher Intelligenz weniger erfahrenen Nutzer unterstützen kann, kann formalisiert und manuell in z.B. einer Datenbank, einer Look-up-table oder in einem Nachschlagewerk gespeichert werden. Somit kann für bestimmte Situationen das benötigte Wissen nachgeschlagen werden. Diese Weise ist nicht besonders effizient, muss manuell gepflegt werden und ist nicht automatisiert. Alternativ kann Wissen auch anders, z.B. in Form eines Videos oder Textes, abgespeichert werden, was allerdings auch sehr statisch ist und nur manuell erweitert und angewendet werden kann.

Es ist also eine Aufgabe der vorliegenden Erfindung, KI-basierte Systeme möglichst automatisiert zu generieren, zu erweitern und zu verbessern.

Die Lösung dieser Aufgabe umfasst ein System mit einem Computer, kurz Komponente, welches ein sogenanntes AI-Framework realisiert, mit dem ein AI-unerfahrener Nutzer angeleitet und unterstützt wird, seine eigene spezifische Lösung zu bauen. Die Lösung umfasst vorteilhaft auch ein Verfahren, welches das AI-Framework automatisch mit Wissen und Erfahrungen anreichert und erweitert. Von diesem erweiterten Wissen profitiert anschließend der Nutzer (oder andere Nutzer) wieder, da die automatisierte Auswahl an AI-Technologien, Netzwerkarchitekturen, etc. dadurch zusätzliche und spezifischere Möglichkeiten beinhaltet.

Das AI-Framework leitet einen unerfahrenen Nutzer an, sich seine eigene spezifische Lösung zu generieren. Es beinhaltet automatisierte Schritte, die dem Nutzer Expertenentscheidungen abnehmen. Der Nutzer kann optional Schritte durchführen, welche die automatisierten Schritte vorbereiten. Das AI-Framework beinhaltet außerdem einen Knowledge-Graph, in dem Expertenwissen abgespeichert ist, welches bei den Entscheidungen bei der Erstellung der AI-Lösung verwendet wird. Der Knowledge-Graph beinhaltet einen Bereich, der industrielle Probleme beschreibt, einen Bereich, welcher AI-Methodiken und deren detaillierte Umsetzung inklusive Netzwerk-Architekturen (z.B. für ein neuronales Netzwerk) beschreibt und einen Bereich, der Charakteristika bestimmter Beispieldaten beschreibt. Der Nutzer füllt einen detaillierten Fragebogen zur Beschreibung des Problems aus. Die Informationen aus dem Fragebogen werden automatisiert in Subjekt-Prädikat-Objekt-Tupel übersetzt und im Bereich der Problembeschreibungen im Knowledge-Graph gesucht. Außerdem werden Subjekt-Prädikat-Objekt-Tupel aus den Charakteristika der hochgeladenen Beispieldaten (wenn vorhanden) automatisiert extrahiert und im Knowledge-Graph im Bereich der Beispieldaten gesucht. Anschließend werden von diesen Knoten aus automatisiert Referenzen zum Bereich der AI-Methodiken im Knowledge-Graph gesucht und separat abgespeichert. Dieser Vorgang kann mehrere, nicht eindeutige Lösungen hervorbringen, was zur Folge hat, dem Nutzer nochmal weitere Fragen zu stellen, um die Auswahl einzuschränken. Oder es werden mehrere Lösungen erstellt und der Nutzer wird angeleitet, die passendste Lösung auszuwählen. Alternativ wird die beste Lösung automatisiert gefunden, z.B. durch den Vergleich bestimmter Metriken bzw. Leistungskennzahlen (z.B. "Accuracy" - Genauigkeit der Antwort der KI-Anwendung, oder "Response Time" - Antwortzeit des KI-Netzwerkes auf eine Anfrage).

Die der Erfindung zugrunde liegende Aufgabe wird konkret durch ein Verfahren gemäß Patentanspruch 1 und durch ein System gemäß Patentanspruch 10 gelöst. Insbesondere wird die Aufgabe auch durch ein entsprechendes Computerprogrammprodukt gelöst, welches auf einem Computer ausgeführt wird.

Dabei wird ein Verfahren zum Erstellen einer industriellen Lösung mit einer künstlichen Intelligenz vorgeschlagen, wobei durch einen Computer nach der Eingabe einer Problemstellung zumindest ein Vorschlag für den Lösungsweg inkl. der Architektur der Lösung mit einer künstlichen Intelligenz erstellt wird. Dabei sind in Tupeln eines Knowledge-Graph erste Informationen über Daten, zweite Informationen über Anwendungen und dritte Informationen über Lösungen mit Modellen für künstliche Intelligenz gespeichert, wobei die Tupel mit den ersten und den zweiten Informationen mit den Tupeln der dritten Informationen zumindest teilweise mittels gewichteter Referenzen verknüpft sind. In einem ersten Schritt werden aus den Informationen der eingegebenen Problemstellung neue Tupel extrahiert, wonach in einem zweiten Schritt zu den neuen Tupeln identische oder zumindest ähnliche Tupel im Knowledge-Graph gefunden werden, wobei in einem dritten Schritt anhand der gewichteten Referenzen der gefundenen Tupel zu den Tupeln mit den dritten Informationen zumindest eines der Modelle für künstliche Intelligenz gefunden wird. Schließlich wird in einem vierten Schritt das zumindest eine gefundene Modell für die Architektur (inkl. der sog. "Pipeline") der Lösung vorgeschlagen und verwendet. Durch dieses Verfahren können auch wenig spezialisierte Benutzer durch eine einfache Eingabe von Basisinformationen eine geeignete KI-Lösung bzw. KI-Architektur identifizieren bzw. vorschlagen lassen und ggf. automatisiert implementieren und parametrisieren lassen. Der Begriff "Architektur" soll dabei und im Folgenden den gesamten Lösungsweg betreffen und umfasst die sog. "Pipeline", d.h. die gesamte KI-Lösung inkl. Datenerfassung, Datenvorbereitung, Vorschlagen des Algorithmus, Trainieren des Modells, Validieren des trainierten Modells. Diese "Pipeline" kann komplett im Knowledge-Graph gespeichert sein und vorgeschlagen und später (teil-)automatisiert realisiert werden.

Die Aufgabe wird außerdem durch ein System zum Erstellen einer industriellen Lösung mit einer künstlichen Intelligenz gelöst, wobei durch einen Computer nach der Eingabe einer Problemstellung zumindest ein Vorschlag für eine Architektur der Lösung mit einer künstlichen Intelligenz erstellt wird. Dabei sind in Tupeln eines Knowledge-Graph erste Informationen über Daten, zweite Informationen über Anwendungen und dritte Informationen über Modelle für künstliche Intelligenz gespeichert, wobei die Tupel mit den ersten und den zweiten Informationen mit den Tupeln der dritten Informationen zumindest teilweise mittels gewichteter Referenzen verknüpft sind. Dabei ist in dem System vorgesehen, dass in einem ersten Schritt aus den Informationen der eingegebenen Problemstellung neue Tupel extrahiert werden, wonach in einem zweiten Schritt zu den neuen Tupeln identische oder zumindest ähnliche Tupel im Knowledge-Graph gefunden werden, wobei in einem dritten Schritt anhand der gewichteten Referenzen der gefundenen Tupel zu den Tupeln mit den dritten Informationen zumindest eines der Modelle für künstliche Intelligenz gefunden wird. Schließlich wird in einem vierten Schritt das zumindest eine gefundene Modell für die Architektur der Lösung vorgeschlagen und verwendet. Mit diesem System lassen sich die bereits anhand des Verfahrens diskutierten Vorteile erzielen; dies gilt gleichfalls für ein erfindungsgemäßes Computerprogrammprodukt.

Vorteilhafte Ausgestaltungen des erfindungsgemäßen Verfahrens sind in den abhängigen Patentansprüchen angegeben. Die dabei angegebenen Merkmale und deren Vorteile gelten sinngemäß auch für das erfindungsgemäße System und für ein entsprechend ausgestaltetes Computerprogrammprodukt. Vorteilhafte Ausgestaltungen können sowohl einzeln als auch in Kombination miteinander realisiert sein.

Vorteilhaft wird nach Erstellung und/oder Einsatz der Lösung diese Lösung zur Erweiterung oder Änderung des Knowledge-Graph verwendet, was durch Hinzunahme, Entfernen oder Änderung von Referenzen oder durch Hinzunahme, Entfernen oder Ändern von Tupeln oder Knoten oder ganzen Strukturen aus des Knowledge-Graph geschehen kann. Insgesamt wird die Erfahrung mit der aktuellen Lösung der bereits im Knowledge-Graph repräsentierten Wissensbasis hinzugefügt. Dabei kann entweder eine schon existierende Lösung neu bewertet werden oder eine neue Lösung eines neuen oder eines bereits bekannten Problems hinzugefügt werden. Ein Nutzer kann beispielsweise fertige Lösungen - beispielsweise extern aufgefunden oder schon vorhanden - hochladen, aus welchen dann automatisiert Informationen extrahiert werden und diese dann als Tupel automatisch an die richtigen Stellen im Knowledge-Graph eingepflegt werden (anhängig von der betrachteten Problemstellung und den verwendeten Daten) und dabei mit Daten- und Problembeschreibungs-Knoten durch Referenzen verknüpft werden. Ebenso können dabei neue Tupel und Referenzen in allen Teilbereichen des Knowledge-Graph generiert werden.

In einer vorteilhaften Variante wird die Lösung durch einen Nutzer bewertet, wobei die Bewertung bei der Erweiterung oder Änderung des Knowledge-Graph berücksichtigt wird. Zukünftige Entscheidungen werden dadurch verbessert.

Vorteilhaft werden in dem dritten Schritt mehrere aufgefundene Modelle oder Architekturen zur Verwendung für die Lösung vorgeschlagen, wobei den vorgeschlagenen Modellen jeweils eine Leistungskennzahl zugeordnet ist, wobei ein Nutzer anhand der Leistungskennzahl eines der Modelle bzw. eine der Architekturen auswählt. Der Nutzer kann somit zu einer besseren Entscheidung unterstützt werden, weil die den Lösungen bzw. Architekturen zugeordneten und angezeigten Leistungskennzahlen (z.B. Genauigkeit, Geschwindigkeit, Ressourcenbedarf, Komplexität, Wartungsaufwand, Trainingsaufwand) es ermöglichen, eine auf den spezifischen Bedarf ausgerichtete Lösung / Architektur auszuwählen. Alternativ kann die Entscheidung anhand der Leistungskennzahl auch automatisiert vorgenommen werden, wenn der Nutzer keine Präferenz hat. Die automatisierte Entscheidung kann z.B. auch in Abhängigkeit der aktuellen Situation in der Anlage des Nutzers (z.B. eingeschränkter Platz zur Installation von Sensorik, mögliche Sample Rate der Daten zur Laufzeit, Target Devices, etc.) geschehen, was man auch durch den Fragebogen abfragen kann.

Eine bessere Unterstützung durch das System ergibt sich, wenn mit der Problemstellung Beispieldaten eingegeben werden, wobei aus den Beispieldaten automatisch Charakteristika als erste Informationen erstellt werden. Das System kann auch dabei unterstützen, Beispieldaten zu Generieren (z.B. durch CAD-Systeme oder Simulationen), oder auch Beispieldaten anzupassen (z.B. durch Bildbearbeitung). Der Nutzer kann also als Beispieldaten sowohl reale Daten als auch künstlich erzeugte bzw. geänderte Daten eingeben. In einer einfachen Variante gibt der Nutzer eine Beschreibung der Art der als "Input" für die KI-Lösung bereitstehenden Daten an, was beispielsweise anhand von Metadaten geschehen kann, oder durch einfache Auswahl sog. "Checkboxen" oder dergleichen in einem Benutzerdialog. Beispielsweise können bei Bilddaten als Metadaten Bildgröße, RGB-Werte, zusätzlich Tiefeninformationen, künstlich oder real, Kameratyp, Kameraposition, Lichtverhältnisse, Sättigung, Sample-rate etc. verwendet werden.

Vorteilhaft wird mit der Problemstellung ein Typ einer Ziel-Hardware für die Lösung eingegeben, wobei der Typ im zweiten Schritt als ein zu suchendes Tupel verwendet wird. Damit kann gezielt für eine vorhandene oder gewünschte Hardware (z.B. PLC, PC / Server, Neurales Prozessormodul, Cloud-Computing Plattform etc.) eine geeignete Lösung ausgewählt bzw. erstellt werden.

Das System kann aber auch in dem dritten Schritt zumindest einen Typ für eine geeignete Ziel-Hardware vorschlagen, ggf. können auch mehrere geeignete "Targets" angegeben und die dabei erzielbaren Leistungskennzahlen aufgelistet werden. Ebenso können ungeeignete "Plattformen" und/oder Architekturen (z.B. AI-Modelle) als solche gekennzeichnet werden.

Vorteilhaft wird durch den Computer eine ausführbare Lösung mit dem gefundenen Modell erstellt und auf eine geeignete Ziel-Hardware übertragen und in Betrieb genommen ("Deployment"). Dies kann ggf. sogar ohne zwischenzeitlichem Nutzereingriff geschehen. Vorher kann das trainierte Modell aber noch optional z.B. mit realen Testdaten validiert werden. Insgesamt kann mit ein- und demselben System sowohl eine geeignete Lösung aufgefunden als auch realisiert werden.

Beispiele des erfindungsgemäßen Verfahrens werden nachfolgend anhand der Zeichnungen erläutert; sie dienen gleichzeitig der Erläuterung eines erfindungsgemäßen Systems ("AI Framework") und entsprechender Engineering-Software (Computerprogrammprodukt) .

Dabei zeigen:
- Figur 1: in schematischer Darstellung einen Knowledge-Graph mit Teilbereichen für Problembeschreibungen, Beispieldaten und AI-Technologien,
- Figur 2: die Verwendung des Knowledge-Graph zum Auffinden einer geeigneten Lösung,
- Figur 3: die Anreicherung eines Knowledge-Graph mit einer aufgefundenen (und ggf. bewerteten) Lösung, und
- Figur 4: die Erweiterung des Knowledge-Graph mit einer Problembeschreibung und Lösung.

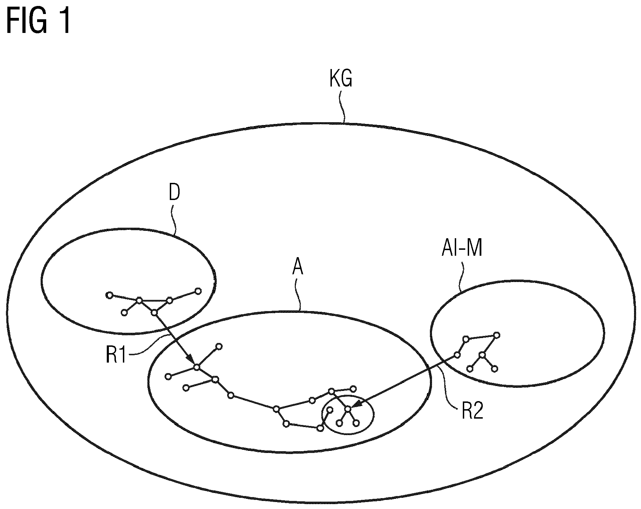

Die Figur 1 zeigt schematisch einen Knowledge-Graph KG, in dem das zur Bestimmung einer geeigneten KI-Lösung benötigte Expertenwissen in den Teilbereichen A (Problembeschreibung), D (Beispieldaten) und AI-M (AI-Technologien; AI-Modelle) mit den Referenzen R1, R2 gespeichert ist. In diesem stark vereinfachten Beispiel stehen die Referenzen R1 und R2 sinnbildlich für alle Referenzen, die aus den Bereichen D und A zu AI-M zeigen. Die Referenzen R1, R2 sind vorteilhafter Weise gewichtet, d.h., sie weisen einen numerischen Wert auf, der umso größer ist, desto stärker die Beziehung zwischen den Knoten ist. Ungeeignete oder ungewünschte Beziehungen, beispielsweise zu später verworfenen Lösungen oder AI-Technologien, können sogar negativ gewichtet sein. Natürlich können von einer Problembeschreibung bzw. einem Knoten oder Tupel einer konkreten Problemstellung mehrere unterschiedlich gewichtete Referenzen zu unterschiedlichen AI-Technologien bestehen; gleiches gilt für Referenzen, die Beispieldaten mit AI-Technologien verknüpfen.

Dazu werden vom Nutzer Informationen mittels eines "Fragebogens", eines "Wizard" oder dergleichen eingeholt.

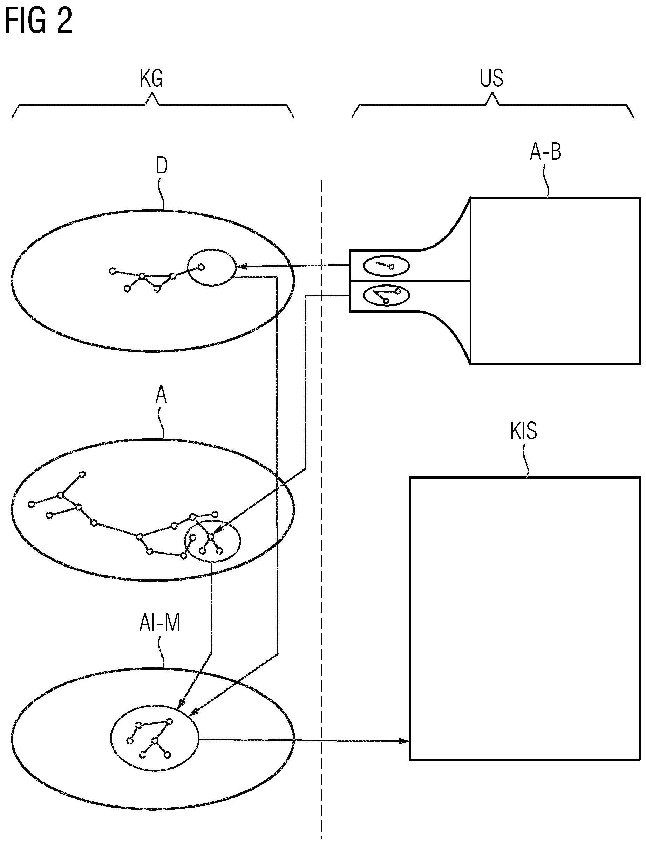

Die Nutzung eines Knowledge-Graph und dessen spätere Verbesserung ("Anreicherung") wird nachfolgend anhand der Figur 2 beschrieben. Die Figur 2 zeigt dabei auf der linken Seite analog zur Figur 1 einen Knowledge-Graph KG mit den Teilbereichen D (Daten), A (Anwendung) und AI-M (AI-Modell; AI-Architektur). Auf der rechten Seite ist die sog. User-Sicht US mit einer Anwendungsbeschreibung A-B dargestellt. Rechts unten ist als Systemantwort die Lösung KIS (KI-System) dargestellt; im Folgenden wird beschrieben, wie diese Systemantwort gebildet wird.

In einem ersten Beispiel beschreibt ein Nutzer seine Problemstellung mit einem vorgegeben Fragebogen. Er gibt u.a. an, ein Kamerasystem in seiner Produktion integriert zu haben, dass er aber noch keine Daten aufgenommen hat. Das Produkt-Design fand über ein CAD-System statt und dessen CAD-Daten stehen zur Verfügung. Außerdem gibt es Prozessdaten, die über das Kommunikationsprotokoll OPC UA zur Verfügung stehen. Als Anwendung möchte der Nutzer eine Qualitätsprüfung seiner Produkte umsetzen. Diese Informationen sind in der Anwendungsbeschreibung A-B zusammengefasst; im Beispiel der Figur 2 sind das die Eingabefelder Problem, Data (Daten) und Performance (Leistung).

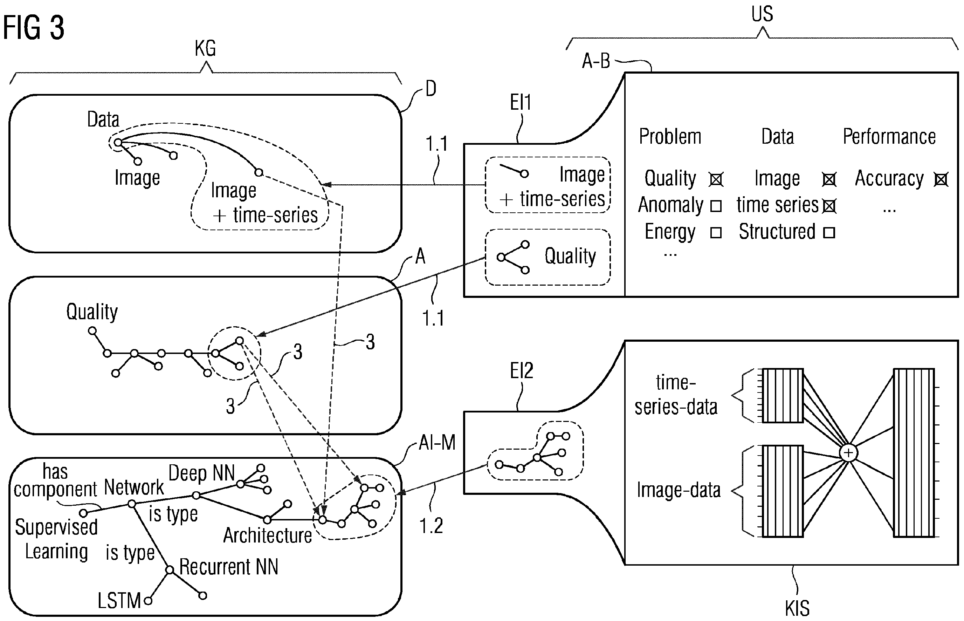

Auf der linken Seite der Figur 3 ist die Problembeschreibung A-B detaillierter dargestellt. Zu beachten ist, dass es sich hier um ein stark vereinfachtes Beispiel handelt für das, was an Informationen für diesen Use-Case nötig wäre; in einem realen System sind meist weitere Informationen notwendig.

Jetzt wird eine zum Problem und zu den vorhandenen Daten passende AI-Technologie über die Referenzen im Knowledge-Graph KG ausgewählt. Dabei wird dem Nutzer mittels einer graphischen Nutzeroberfläche eines Computers genau erläutert, auf welcher Entscheidung diese Auswahl beruht (z.B. welche Subjekt Knoten im Knowledge-Graph haben auf die meistreferenzierte AI-Technologie referenziert). Dazu werden zuerst die Informationen der Anwendungsbeschreibung A-B in Tupel EI1 (Extract Information) gemäß der Syntax der Knowledge-Graph KG umgesetzt. Diese Tupel EI1 werden im vorhandenen Knowledge-Graph KG (konkret: im Teilbereich A) gesucht, wobei idealer Weise identische Muster gesucht werden, in zweiter Näherung aber auch ähnliche Muster. Derselbe Schritt wird sofern vorhanden für die Beispieldaten oder eine Datenbeschreibung durchgeführt. Die dabei extrahierten Muster werden im Teilbereich D (Daten; Data) des Knowledge-Graph KG gesucht.

Die bei den Suchvorgängen ermittelten vorhandenen Muster (Knoten, Tupel, Strukturen) weisen gewichtete Referenzen zu Mustern im Teilbereich AI-M des Knowledge-Graph KG auf. Diese sind in der Figur 2 durch Pfeile dargestellt, die von den aufgefundenen Tupeln der Teilbereiche D, A zu Tupeln des Teilbereichs AI-M zeigen. Anhand der Referenzen und deren Gewichtung werden geeignete AI-Modelle im Teilbereich AI-M gefunden und zusammen mit den beschriebenen Erläuterungen dem Nutzer zur Nutzung vorgeschlagen; in einer Variante entscheidet das System sogleich für das in Summe bestreferenzierte AI-Modell. Vorteilhafter Weise wird nicht nur das passende AI-Modell gefunden, sondern die komplette Architektur inkl. aller zur Realisierung notwendigen Komponenten, der sog. "Pipeline".

In der Figur 2 ist als Resultat die Lösung KIS (Künstliche Intelligenz System) dargestellt, welches die komplette Lösung darstellt, die der Nutzer zur Lösung des eingegebenen Problems benötigt. Anschließend wird der Nutzer bei der Realisierung seiner Lösung KIS unterstützt, beispielsweise durch automatisches Erzeugen eines ablauffähigen Programms mit dem gewählten AI-Modell und Parametrierung des enthaltenen AI-Modells anhand einer Erfahrungsdatenbank und/oder (sofern vorhanden) durch Vortrainieren des AI-Modells mit Beispieldaten. Das ablauffähige Programm wird dann auf eine gewählte Hardware-Plattform ("Target") übertragen ("deployt").

Konkret schlägt in diesem Beispiel das System einen Supervised-Learning Ansatz vor. Im nächsten Schritt wird die Trainingsumgebung erstellt. Dabei schlägt das System vor, Trainingsdaten über ein CAD-Programm zu generieren, da es gute Erfahrungswerte im Knowledge-Graph dazu gibt, für eine Qualitätsprüfung von Produkten die künstliche Intelligenz mit CAD Daten vor zu trainieren und anschließend ein Finetuning mit echten Daten vorzunehmen. Das System verfügt über eine Schnittstelle zu PLM (Product Lifecycle Management) Programmen, aber auch zu nutzerspezifischen Simulationsumgebungen. Es werden Beispieldaten generiert und daraufhin wird eine Netzwerkarchitektur vorgeschlagen, indem die Charakteristika der Beispieldaten mit Charakteristika von Beispieldaten aus dem Knowledge-Graph KG (Teilbereich D) verglichen werden.

Synthetische Beispieldaten werden in einem PLM-Programm (PLM = Product Lifecycle Management), z.B. einem Programm zur Prozeßsimulation, generiert. Aus diesen Daten werden Charakteristika automatisiert entzogen (ggf. liefert das PLM-Programm auch Meta-Informationen), welche mit Charakteristika / Meta-Informationen aus Beispieldaten aus dem Knowledge-Graph KG verglichen werden. Die vorgeschlagene AI-Lösung beinhaltet für das Beispiel der Quality Inspection (Qualitätskontrolle) ein vortrainiertes Neuronales Netzwerk, welches mit den generierten Daten nachtrainiert wird.

Nach dem Training wird der Nutzer angewiesen, eine Evaluierung durchzuführen und das Ergebnis anzunehmen oder abzulehnen. Dabei wird geprüft, ob das trainierte Modell bzw. die vorgeschlagene Lösung KIS die erwarteten Ergebnisse liefert. Der Nutzer kann die erstellte Lösung KIS annehmen oder sich für ein weiteres Training entscheiden. Dieser Schritt kann auch automatisiert stattfinden durch die Verwendung von Metriken. Bei einer Akzeptanz wird eine Target-Plattform basierend auf Erfahrungswerten aus dem Knowledge-Graph u.a. passend zur notwendigen Performance empfohlen und das Modell auf der Target-Plattform installiert (deployt).

Das zweite Beispiel beschreibt einen Fall, in dem der Nutzer noch keinen konkreten Anwendungsfall kennt, er aber prüfen möchte, ob er Mehrwert-Informationen aus seinen Produktionsdaten ziehen kann.

Das System schlägt dafür einen unsupervised-Learning Ansatz vor, da ohne vorher bekannte Kategorisierung allgemeine Muster und Auffälligkeiten gefunden werden sollen. Das System leitet den Nutzer dazu an, Daten zu generieren, zu bereinigen und vor-zu-verarbeiten. Das System wählt basierend auf den hochgeladenen Beispieldaten, welche wiederum mit Charakteristika von Beispieldaten aus dem Knowledge-Graph KG verglichen werden, ein geeignetes unsupervised-learning Verfahren aus (in diesem Beispiel K-means). Der Nutzer wird angeleitet, die Ergebnisse zu evaluieren, die gefundenen Cluster / Gruppierungen zu benennen, und zumindest bei "nicht-gefallen" der aufgefundenen Lösung ein Feedback zu geben, indem ein kleiner Feedbackbogen ausgefüllt werden soll. Dieser wird in den Knowledge-Graph KG als zusätzliches Wissen eingepflegt, um beim nächsten Nutzer oder Anwendungsfall dieses Wissen bereits mit einzubeziehen. Dabei können beispielsweise vorhandene Referenzen neu gewichtet werden. Der manuelle Evaluierungsschritt des Nutzers ist optional und kann auch automatisiert stattfinden, indem mit Ergebnissen aus dem Erfahrungsschatz verglichen wird.

Im Folgenden wird das Verfahren beschrieben, den Knowledge-Graph KG automatisiert mit Wissen anzureichern und zu erweitern. Das führt zu einer Verbesserung des gesamten Systems. Nutzer können erfolgreich generierte AI-Modelle und deren ursprüngliche Problembeschreibungen zur Verfügung stellen. Dafür müssen sie einen detaillierten Fragebogen ausfüllen, der z.B. folgende Kategorien beinhaltet: Problembeschreibung, verwendete Daten, Produktions- und Maschinentypen und Performance des Modells. Dieser Fragebogen ist schematisch im rechten Teil A-B der Figur 3 dargestellt.

Die Figur 3 bildet die notwendigen Schritte ab, um den Knowledge-Graph KG anzureichern. Die Informationen werden zunächst aus dem Fragebogen als Subjekt-Prädikat-Objekt-Tupel EI1 ("extrahierte Informationen 1") extrahiert und automatisiert mit den bestehenden Strukturen im bestehenden Knowledge-Graph KG verglichen. Diejenigen Strukturen, die noch nicht existieren, werden an geeigneter Stelle eingefügt. Somit werden neue Problembeschreibungen automatisch in den Knowledge-Graph KG aufgenommen. Der Nutzer lädt außerdem eine formalisierte Beschreibung (Bereich KIS) der Lösung mit dem AI-Modell hoch, dabei kann er entweder nur die Architektur oder das vollständig trainierte Modell zur Verfügung stellen. Alternativ kann der Benutzer auch in einer Beschreibung auf Meta-Ebene angeben, wie die Vorgehensweise zum Erstellen einer Lösung für das entsprechende Problem ist. Er gibt vorteilhaft die verwendete Programmiersprache oder Beschreibungs-Syntax mit an. Damit kann automatisch nach den bekannten Schlüsselwörtern gesucht werden und das Modell interpretiert werden. Hieraus werden automatisiert Informationen als Subjekt-Prädikat-Objekt-Tupel EI2 ("extrahierte Informationen 2") extrahiert und mit den bestehenden Informationen im Knowledge-Graph KG im Teilbereich AI-M verglichen. Wenn diese noch nicht existieren, werden sie an einer geeigneten Stelle hinzugefügt und angeknüpft. In der Figur 3 ist das im Teilbereich AI-M durch eine mit einer gestrichekten Linie umschlossenen Struktur gezeigt. Wenn der Nutzer zusätzlich Beispieldaten (oder eine Beschreibung der Daten, beispielsweise in Form von Metadaten) zur Verfügung gestellt hat, wird mit den Charakteristika der Beispieldaten das gleiche Prozedere durchgeführt und im Knowledge-Graph KG eingepflegt - siehe die mit gestrichelter Linie umrandeten Strukturen in den Teilbereichen D, A.

Anschließend werden in einem dritten Schritt neue Referenzen - in der Figur 3 mit Pfeilen mit dem Bezugszeichen 3 dargestellt - von den Knoten der Problembeschreibung (Teilbereich A) und der Charakteristika der Beispieldaten (Teilbereich D) zum verwendeten AI-Modell (Teilbereich AI-M) gezogen. Somit wird der Knowledge-Graph KG automatisiert mit neuem Wissen angereichert. Abschließend wird geprüft, in wie weit der anfängliche Fragebogen erweitert werden muss, damit die Informationen mit dem erweiterten Knowledge-Graph KG verglichen werden können, und der Fragebogen wird angepasst.

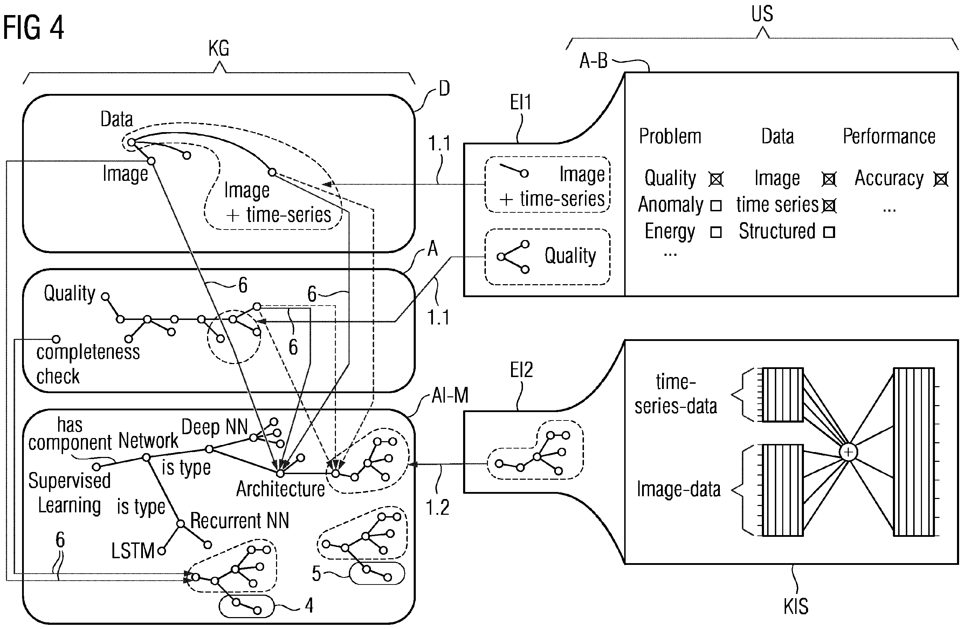

Mit der Figur 4 werden weitere Schritte vier bis sechs erläutert, welche das Ziel haben, den Knowledge-Graph KG intelligent und automatisiert zu erweitern. In einem weiteren vierten Schritt wird dazu ein intelligentes System verwendet, welches die neu eingefügte Struktur mit ähnlichen Strukturen im AI-Modell-Bereich (Teilbereich AI-M) des Knowledge-Graphs vergleicht (vorzugsweise mittels Machine Learning, z.B. Pattern Recognition). Ziel dieses Schrittes ist es, alternative Netzwerkarchitekturen für die neu eingefügte Problembeschreibung zu kreieren und hinzuzufügen. Im dargestellten Beispiel handelt es sich dabei um eine Anwendung, wobei Bilder dahingehend untersucht werden sollen, ob sie alle erforderlichen Bauteile für einen nachfolgenden Montageschritt einer Fertigung enthalten.

Es wird eine ähnliche Struktur 4 identifiziert, auf welche die Problembeschreibung "Completeness Check" und die verwendeten Daten "image" Referenzen haben, also Bilddaten sind. Das bedeutet, dass dies ein geeignetes AI-Modell für Bilddaten ist und das Problem löst, ein Produkt auf Vollständigkeit zu prüfen. Das verwendete AI-Modell hat außerdem noch zwei weitere Knoten, welche hier beispielsweise die Verwendung von Normalisierungs-Layern in der Netzwerkarchitektur sein können. Das könnte eine besonders vorteilhafte Idee sein, welche andere Nutzer mit anderen Problemstellungen hatten, welche aber auch für andere Problemstellungen passen. Das System vergleicht Performance Metriken (z.B. Accuracy - Genauigkeit) der neuen Struktur mit denen der bekannten Struktur.

Zumindest dann, wenn die neu gefundene Struktur eine bessere Performance hat als die bekannte Struktur, wird diese weiter betrachtet. Das System vergleicht die Subjekte, von welchen Referenzen auf diese Struktur zeigen, und wenn diese einen Zusammenhang zur neu hinzugefügten Problembeschreibung oder den verwendeten Daten haben, wird diese gefundene Struktur 5 als Alternative für die neue Problemstellung eingefügt. Abschließend werden im Schritt 6 die gleichen Referenzen gezogen, wie in Schritt 3, plus in diesem Beispiel zusätzlich eine Referenz von Bilddaten auf die Alternative Struktur, weil die Problemstellung mit der Alternative auch allein mit Bilddaten gelöst werden könnte. Alternativ zum Kopieren und neueinfügen der Struktur 5, könnten auch einfach nur neue Referenzen (von image + timeseries date und quality) auf die gefundene ähnliche Struktur 4 gezogen werden. Für jedes AI-Modell können noch Leistungskennzahlen (Performance-Indikatoren) abgespeichert werden, welche z.B. angeben, welche Genauigkeit ("Accuracy") damit erreicht wurde.

Für eine neue Problembeschreibung "Quality und image+time-series" (Quality: Qualitätsuntersuchung; image: Bilddaten; time-series: Datenreihen, z.B. Folgen von Messdaten) würde dem Nutzer dann angezeigt werden, dass es zwei Alternative gibt, wovon eine bereits validiert (Struktur 4) ist und ein Accuracy-Wert existiert, und eine AI-basierte Alternative (Struktur 5) gibt, für die es noch keine Validierung gibt. Der Nutzer kann die nicht-validierte Alternative dann testen und einen Accuracy-Wert hinzufügen. Mit diesem Verfahrensschritt werden vorteilhafte Architekturen und AI-Lösungen aus anderen Bereichen auf die neue Problembeschreibung übertragen.

Für jedes vollständig zur Verfügung gestellte Modell wird im Knowledge-Graph KG eine Referenz abgespeichert, welche auf einen Speicherort verweist, an dem die Gewichte für das trainierte Netzwerk liegen und zusätzlich auch der Datensatz, wenn dieser verfügbar ist. Somit kann ein Nutzer mit gleicher Problemstellung das Modell laden und mit nur wenig Aufwand für seine Anwendung nachtrainieren. Die Verwendung dieses Verfahrens ist besonders vorteilhaft, um dem Nutzer eine Erklärung für jeden Schritt der Auswahl zu liefern. Dafür werden die Subjekte angezeigt, welche auf das AI-Modell zeigen, auf das die meisten (oder in Summe meist gewichteten) Referenzen zeigen. Somit ist die automatisierte Auswahl und Aufbau seiner AI-Lösung keine Blackbox, sondern ein Nutzer kann jeden Schritt nachvollziehen. Der Nutzer bekommt durch die intelligente Anreicherung des Knowledge-Graph KG und die intelligente Erweiterung die beste Lösung aus den bisher bekannten geeigneten Lösungen präsentiert.

Es ergibt sich eine KI-basierte Erweiterung des Knowledge-Graph, indem das Beste aus anderen Bereichen in einen neuen Bereich eingefügt wird. Dies bewirkt eine kontinuierliche Weiterentwicklung des Knowledge-Graphs KG und eine Anreicherung dieser Wissensbasis mit Erfahrungen und somit Verbesserung des AI-Frameworks. Die automatische Extraktion von Informationen des Fragebogens und AI-Modellen und Erweiterung basierend auf hinzukommendem Wissen im Knowledge-Graph macht das System schnell und einfach bedienbar.

Der Benutzer wird durch Ausgabe der Begründung und schrittweisen Erklärung für die Auswahl der AI-Lösung durch den Auswahlprozess geleitet. Eine automatische Erweiterung des Fragebogens für neue Nutzer basierend auf hinzukommendem Wissen führt dazu, dass die Benutzerschnittstelle sich kontinuierlich anpasst. Wenn eine AI-Lösung gut funktioniert, können alle Referenzen, auf die sich für die Auswahl dieser Lösung gestützt wurde, bestärkt werden. Es erfolgt also eine Verbesserung des Systems durch ein sog. "Feedback-loop" durch den Nutzer bei Erstellung der Lösung.

## Patentansprüche

1. Verfahren zum Erstellen einer industriellen Lösung KIS mit einer künstlichen Intelligenz,
wobei durch einen Computer nach der Eingabe einer Problemstellung A-B zumindest ein Vorschlag für eine Architektur der Lösung KIS mit einer künstlichen Intelligenz erstellt wird,
**dadurch gekennzeichnet,**
**dass** in Tupeln eines Knowledge-Graph KG erste Informationen über Daten D, zweite Informationen über Anwendungen A und dritte Informationen über Modelle AI-M für künstliche Intelligenz gespeichert sind,
**dass** die Tupel mit den ersten und den zweiten Informationen mit den Tupeln der dritten Informationen zumindest teilweise mittels gewichteter Referenzen verknüpft sind,
**dass** in einem ersten Schritt aus den Informationen der eingegebenen Problemstellung A-B neue Tupel EI1 extrahiert werden,
**dass** in einem zweiten Schritt zu den neuen Tupeln EI1 identische oder zumindest ähnliche Tupel im Knowledge-Graph KG gefunden werden,
**dass** in einem dritten Schritt anhand der gewichteten Referenzen der gefundenen Tupel zu den Tupeln mit den dritten Informationen zumindest eines der Modelle AI-M für künstliche Intelligenz gefunden wird, und
**dass** in einem vierten Schritt das zumindest eine gefundene Modell AI-M für die Architektur der Lösung KIS vorgeschlagen und verwendet wird.

2. Verfahren nach Patentanspruch 1,
**dadurch gekennzeichnet,**
**dass** nach Erstellung und/oder Einsatz der Lösung KIS diese Lösung KIS zur Erweiterung oder Änderung des Knowledge-Graph KG verwendet wird.

3. Verfahren nach Patentanspruch 1,
**dadurch gekennzeichnet,**
**dass** eine vorhandene Lösung KIS analysiert und zur Änderung oder Erweiterung des Knowledge-Graph KG verwendet wird, wobei aus der vorhandenen Lösung neue Tupel extrahiert werden und zu diesen neuen Tupeln im Knowledge-Graph KG identische oder ähnliche vorhandene Tupel gesucht werden, und wobei Referenzen von und zu vorhandenen aufgefundenen Tupeln verändert werden und/oder die neuen Tupel zur Erweiterung des Knowledge-Graph KG verwendet werden.

4. Verfahren nach Patentanspruch 2 oder 3,
**dadurch gekennzeichnet,**
**dass** die Lösung KIS durch automatisiert oder durch einen Nutzer bewertet wird, wobei die Bewertung bei der Erweiterung oder Änderung berücksichtigt wird.

5. Verfahren nach einem der vorhergehenden Patentansprüche,
**dadurch gekennzeichnet,**
**dass** in dem dritten Schritt mehrere aufgefundene Modelle AI-M zur Verwendung für die Lösung KIS vorgeschlagen werden, wobei den vorgeschlagenen Modellen AI-M jeweils eine Leistungskennzahl zugeordnet ist, wobei ein Nutzer anhand der Leistungskennzahl eines der Modelle auswählt.

6. Verfahren nach einem der vorhergehenden Patentansprüche,
**dadurch gekennzeichnet,**
**dass** mit der Problemstellung Beispieldaten eingegeben werden, wobei aus den Beispieldaten automatisch Charakteristika als erste Informationen erstellt werden.

7. Verfahren nach einem der vorhergehenden Patentansprüche,
**dadurch gekennzeichnet,**
**dass** mit der Problemstellung ein Typ einer Ziel-Hardware für die Lösung KIS eingegeben wird, wobei der Typ im zweiten Schritt als ein zu suchendes Tupel verwendet wird.

8. Verfahren nach einem der vorhergehenden Patentansprüche,
**dadurch gekennzeichnet,**
**dass** in dem dritten Schritt zumindest ein Typ für eine geeignete Ziel-Hardware ausgegeben wird.

9. Verfahren nach einem der vorhergehenden Patentansprüche,
**dadurch gekennzeichnet,**
**dass** durch den Computer eine ausführbare Lösung KIS mit dem gefundenen Modell AI-M erstellt und auf eine geeignete Ziel-Hardware übertragen wird.

10. System zum Erstellen einer industriellen Lösung KIS mit einer künstlichen Intelligenz,
wobei durch einen Computer nach der Eingabe einer Problemstellung A-B zumindest ein Vorschlag für eine Architektur der Lösung mit einer künstlichen Intelligenz erstellt wird,
**dadurch gekennzeichnet,**
**dass** in Tupeln eines Knowledge-Graph erste Informationen über Daten D, zweite Informationen über Anwendungen A und dritte Informationen über Modelle AI-M für künstliche Intelligenz gespeichert sind,
**dass** die Tupel mit den ersten und den zweiten Informationen mit den Tupeln der dritten Informationen zumindest teilweise mittels gewichteter Referenzen verknüpft sind,
wobei im System vorgesehen ist,
**dass** in einem ersten Schritt aus den Informationen der eingegebenen Problemstellung neue Tupel EI1 extrahiert werden,
**dass** in einem zweiten Schritt zu den neuen Tupeln identische oder zumindest ähnliche Tupel im Knowledge-Graph KG gefunden werden,
**dass** in einem dritten Schritt anhand der gewichteten Referenzen der gefundenen Tupel zu den Tupeln mit den dritten Informationen zumindest eines der Modelle AI-M für künstliche Intelligenz gefunden wird, und
**dass** in einem vierten Schritt das zumindest eine gefundene Modell AI-M für die Architektur der Lösung KIS vorgeschlagen und verwendet wird.

11. Computerprogrammprodukt zur Ausführung auf einem Computer,
**dadurch gekennzeichnet,**
**dass** das Computerprogrammprodukt zur Ausführung des Verfahrens gemäß Patentanspruch 1 ausgestaltet ist.
